(19) Europäisches Patentamt
European Patent Office
Office européen des brevets

(11) **EP 1 669 727 B1**

(12) **EUROPÄISCHE PATENTSCHRIFT**

(45) Veröffentlichungstag und Bekanntmachung des Hinweises auf die Patenterteilung:
**11.03.2015 Patentblatt 2015/11**

(51) Int Cl.:
*G01F 25/00* *(2006.01)* *G01F 1/84* *(2006.01)*

(21) Anmeldenummer: **05019478.6**

(22) Anmeldetag: **07.09.2005**

(54) **Verfahren zum Betreiben eines Massendurchflussmessgeräts**

Method for operating a mass flow meter

Procédé de commande d'un débitmètre massique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.12.2004 DE 102004058094**
**22.03.2005 DE 102005013770**

(43) Veröffentlichungstag der Anmeldung:
**14.06.2006 Patentblatt 2006/24**

(73) Patentinhaber: **Krohne AG**
**4019 Basel (CH)**

(72) Erfinder:
• **Kolahi, Kourosh**
**24118 Kiel (DE)**
• **Storm, Ralf**
**45131 Essen (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**US-A- 5 497 665 US-A- 5 734 112**

**Beschreibung**

Die Erfindung betrifft ein Verfahren zum Betreiben eines Massendurchflußmeßgeräts, das nach dem Coriolis-Prinzip arbeitet, wobei das Massendurchflußmeßgerät ein von einem Medium durchströmtes Meßrohr aufweist, eine Schwingungsanregung des Meßrohrs vorgesehen ist und die resultierende Schwingungsantwort des Meßrohrs erfaßt wird.

Ein derartiges Verfahren ist z. B. aus der DE 100 02 635 A1 bekannt. Dort ist beschrieben, das Meßrohr in drei voneinander unabhängigen Schwingungsformen anzuregen und mittels der erfaßten Schwingungsantwort charakteristische Größen des Massendurchflußmeßgeräts, wie den Nullpunkt und die Empfindlichkeit des Massendurchflußmeßgeräts, mit Hilfe eines physikalisch-mathematischen Modells während des Betriebs des Massendurchflußmeßgeräts zu bestimmen.

Die Bestimmung der charakteristischen Größen "Nullpunkt" und "Empfindlichkeit" im Betrieb des Massmdurchflußmeßgeräts dient im wesentlichen der Verbesserung der Meßgenauigkeit der Massendurchflußmessung. Mit einem Coriolis-Massendurchflußmeßgerät ist jedoch grundsätzlich auch eine Druckmessung des durch das Meßrohr strömenden Mediums möglich. Bei herkömmlichen Coriolis-Massendurchflußmeßgeräten ist dies häufig dadurch realisiert, daß dies über eine Dchnungsmessung am Meßrohr, z. B. mit Hilfe von Dehnungsmeßstreifen, erfolgt. Mit dem damit erfaßten Druck als weitere Meßgröße können z. B. Störungen anderer Meßgrößen durch den Einfluß des Drucks korrigiert werden. Allerdings sind dafür immer zusätzliche Einrichtungen zur Erfassung des Drucks, wie die angesprochenen Dehnungsmeßstreifen, erforderlich.

Dementsprechend ist es die Aufgabe der Erfindung, ein derartiges Verfahren zum Betreiben eines Massendurchflußmeßgeräts anzugeben, bei dem ohne zusätzliche Einrichtungen der Druck im Meßrohr auf elegante Art und Weise bestimmt werden kann.

Ausgehend von dem eingangs beschriebenen Verfahren ist die zuvor hergeleitete und aufgezeigte Aufgabe dadurch gelöst, daß der Druck des durch das Meßrohr strömenden Mediums bestimmt wird, indem die erfaßte Schwingungsantwort auf der Grundlage eines physikausciwnamemaüschen Modells für die Dynamik des Massendurchflußmeßgeräts aus gewertet wird.

Erfindungsgemäß ist also vorgesehen, daß eine Schwingungsanregung des Meßrohrs erfolgt, die eine Anregung in zwei voneinander verschiedenen Frequenzen und in einer Eigenformen ist wobei die Schwingungsantwort des Meßrohrs darauf erfaßt wird, und mittels eines physikalisch-mathematischen Modells, das die Schwingungsantwort auf eine vorbestimmte Schwingungsanregung wiedergibt, auf den Druck im Meßrohr rückgeschlossen wird.

Dabei ist gemäß einer bevorzugten Weiterbildung der Erfindung insbesondere vorgesehen, daß ein physikalisch-mathematisches Modell wenigstens zweiter Ordnung für die Dynamik des Massendurchflußmeßgeräts verwendet wird. Im übrigen sei darauf hingewiesen, daß neben den angesprochenen Schwingungsanregungen des Meßrohrs in zwei voneinander verschiedenen Frequenzen und in einer Eigenform selbstverständlich zusätzliche Anregungen in weiteren Frequenzen oder/und Eigenformen möglich sind. Maßgeblich ist dabei lediglich, daß das verwendete physikalisch-mathematische Modell geeignet ist, eine Aussage über die erwartete Schwingungsantwort bei einer vorbestimmten Schwingungsanregung des Meßrohrs zu geben.

Demgemäß ist gemäß einer bevorzugten Weiterbildung der Erfindung vorgesehen, daß das physikalisch-mathematische Modell zur Beschreibung der Schwingungen des Massendurchflußmeßgeräts bei Anregung des Meßrohrs in wenigstens einer Eigenform geeignet ist Dabei kommt grundsätzlich die erste Eigenform in Betracht Dabei ist es gemäß einer bevorzugten Weiterbildung der Erfindung ferner vorgesehen, daß das physikalisch-mathematische Modell die Kopplung zwischen der ersten Eigenform und zweiten Eigenform der Schwingungen des Meßrohrs berücksichtigt.

Grundsätzlich ist eine Mehrzahl von Ansätzen denkbar, den Druck über ein derartiges physikalisch-mathematisches Modell zu erfassen. Erfindungsgemäß ist jedoch vorgesehen, daß über das physikalisch-mathematische Modell die effektiv wirksame Federsteifigkeit des Meßrohrs berücksichtigt wird. Dabei ist gemäß einer Variante der Erfindung vorgesehen, daß eine Betriebsanregung und eine Zusatzanregung in der ersten Eigenform des Meßrohrs erfolgen und die effektiv wirksame Federsteifigkeit des Meßrohrs bei einer Schwingung in der ersten Eigenform mittels der über die Betriebsanregung ermittelte Resonanzfrequenz des vom Medium durchflossenen Meßrohrs in der ersten Eigenform und der Schwingungsantwort auf die Zusatzanregung erfaßt wird. Dabei ist mit "Betriebsanregung" eine Anregung des Meßrohrs des Coriolis-Massendurchflußmeßgeräts zum "normalen" Betrieb gemeint, also für eine eigentliche Massendurchflußmessung. Dementsprechend meint der Begriff "Zusatzanregung" vorliegend eine andere Anregung als die "Betriebsanregung", um weitere Schwingungsantworten zu erhalten.

Gemäß einer anderen Variante der Erfindung ist ferner vorgesehen, daß zwei Zusatzanregungen in der ersten Form des Meßrohrs erfolgen und die effektiv wirksame Federsteifigkeit des Meßrohrs bei einer Schwingung in seiner ersten Eigenform mittels der Schwingungsantworten auf die beiden Zusatzanregungen erfaßt wird.

Durch die Anwendung des physikalisch-mathematischen Modells alleine kann schon eine sehr genaue Bestimmung des Drucks im Meßrohr des Coriolis-Massendurchflußmeßgeräts erfolgen. Gemäß einer bevorzugten Weiterbildung der Erfindung ist jedoch vorgesehen, daß bei der Bestimmung des Drucks zusätzliche Einflüsse auf die Dynamik des Meßrohrs, wie die Bewegung des Tragrohrs oder/und die Einflüsse durch eine Aufhängung des Meßrohrs, berücksichtigt werden. Ferner kann gemäß einer bevorzugten Weiterbildung der Erfindung vorgesehen sein, daß die Temperatur im Massendurchflußmeßgerät erfaßt wird, um die Temperaturabhängigkeit der Funktion von Einrichtungen des Massendurchflußmeßgeräts, wie einem Schwingungserzeuger für das Meßrohr oder/und einem Schwingungssensor für das Meßrohr, zu berücksichtigen.

Weiterhin ist gemäß einer bevorzugten Weiterbildung der Erfindung vorgesehen, daß die Temperatur des Meßrohrs erfaßt wird, um eine temperaturabhängige Änderung der Federsteifigkeit des Meßrohrs bei der Bestimmung des Drucks zu berücksichtigen.

Im einzelnen gibt es nun eine Vielzahl von Möglichkeiten, das erfindungsgemäße Verfahren zum Betreiben eines Coriolis-Massendurchflußmeßgeräts auszugestalten und weiterzubilden. Dazu wird auf die unabhängigen Patentansprüche sowie auf die nachfolgende detaillierte Beschreibung mehrerer bevorzugter Ausführungsbeispiele der Erfindung unter Bezugnahme auf die Zeichnung verwiesen. In der Zeichnung zeigt

Fig. 1 schematisch den mechanischen Aufbau eines Coriolis-Massendurchflußmeßgeräts zur Verwendung mit den Verfahren gemäß den nachfolgend beschriebenen bevorzugten Ausführungsbeispielen der Erfindung,

Fig. 2 einen für das physikalisch-mathematische Modell verwendeten Modellansatz mit konzentrierten Ersatzelementen,

Fig. 3 den Verlauf der Federsteifigkeit in der ersten Eigenform des Meßrohrs eines Coholis-Massendurchflußmeßgeräts in Abhängigkeit vom Betriebsdruck und

Fig. 4 den Verlauf der Federsteifigkeit in der zweiten Eigenform des Meßrohrs eine Coriolis-Massendurchflußmeßgeräts in Abhängigkeit vom Betriebsdruck.

Wie weiter oben schon ausgeführt, wird bei herkömmlichen Coriolis-Massendurchflußmeßgeräten, eine Änderung des Meßrohrs durch die Einwirkung des Drucks im Meßrohrs mit Hilfe von bekannten Meßverfahren zur Dehnungsmessung, wie der Verwendung von Dehnungsmeßstreifen, erfaßt. Damit kann der Druck als weitere Meßgröße bestimmt werden, wodurch die Störung anderer Meßgrößen durch den Einfluß des Drucks korrigiert werden kann. Erfindungsgemäß wird nun der Druck ohne zusätzliche Einrichtungen gemessen, nämlich über die Einrichtungen, die ohnehin zur Erfassung des Antwortverhaltens des Coriolis-Massendurchflußmeßgeräts bei Schwingungsanregung vorgesehen sind.

Erfindungsgemäß dient das Meßrohr zur Druckbestimmung als Membran und ändert seine Nachgiebigkeit in Abhängigkeit vom Druck im Meßrohr. Diese Änderung wird als Maß für den Druck erfaßt und ausgegeben. Bei den vorliegend beschriebenen bevorzugten Ausführungsbeispielen der Erfindung besteht die Grundidee darin, eine gezielte Anregung des Meßrohrs des Coriolis-Massendurchflußmeßgeräts und eine Auswertung der erfaßten Schwingungsantwort modellgestützt derart durchzuführen, daß die Spannungen des Meßrohrs, bedingt durch den Druck im Meßrohr, über die Messung der wirksamen Federsteifigkeit des Meßrobrs in wenigstens einer Eigenform gemessen wird.

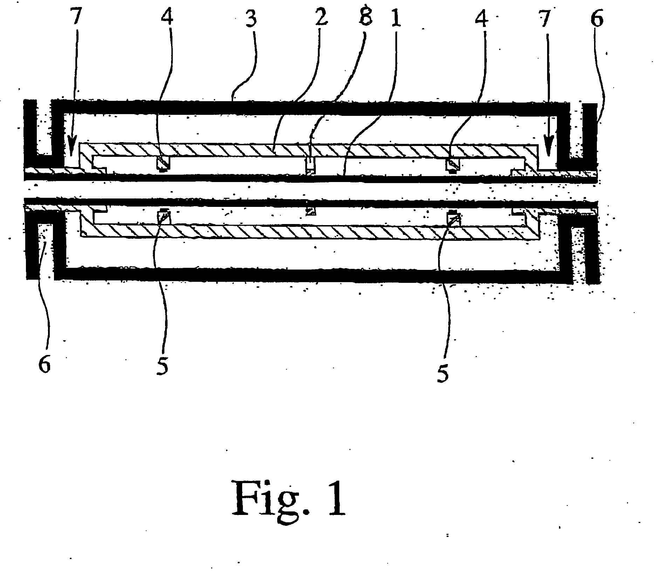

Aus Fig. 1 ist nun schematisch ein Coriolis-Massendurchflußmeßgerät mit seinem mechanischen Aufbau dargestellt, wie es für das vorliegend beschriebene Verfahren gemäß den bevorzugten Ausführungsbeispielen geeignet ist. Dabei sei darauf hingewiesen, daß das erfindungsgemäße Verfahren nicht auf ein Coriolis-Massendurchflußmeßgerät der in Fig. 1 gezeigten Bauform beschränkt ist, vielmehr sind im wesentlichen beliebige Rohrgeometrien, unter anderem auch mit nur einem Schwingungserzeuger und auch mit Doppelrohranordnungen, möglich.

Fig. 1 zeigt nun im Schnitt ein Coriolis-Massendurchflußmeßgerät mit einem Meßrohr 1, einem Tragrohr 2 und einem Schutzrohr 3, zwei Schwingungserzeugern 4 und zwei Schwingungssensoren 5. Dabei ist genau ein gerades Meßrohr 1 vorgesehen, wobei das aus Fig. 1 ersichtliche Coriolis-Massendurchflußmeßgerät über Flansche 6 in ein bestehendes, nicht weiter dargestelltes Rohrleitungssystem einbaubar ist. Die Kopplung zwischen den Flanschen 6 und dem System aus Meßrohr 1 und Tragrohr 2 erfolgt dabei über als Aufhängungen 7 bezeichnete Abschnitte. Außerdem ist in der Mitte des Meßrohrs 1 eine das Meßrohr 1 mit dem Tragrohr 2 verbindende Mittenfeder 8 vorgesehen, die dazu dient, die Steifigkeit des Meßrohrs 1 zu erhöhen, wie z. B. in der DE 42 00 060 A1 beschrieben.

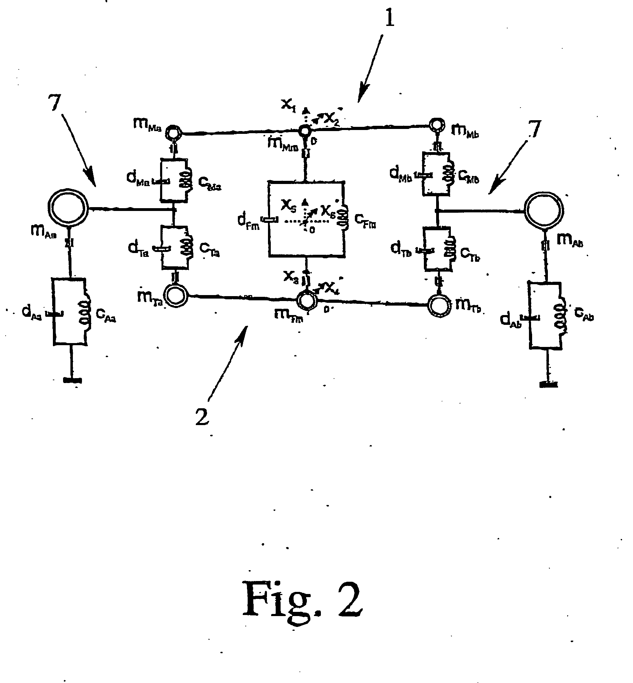

Aus Fig. 2 ist nun ein für das vorliegend verwendete physikalisch-mathematische Modell gültiger Modellansatz mit konzentrierten Ersatzelementen des Coholis-Massendurchflußmeßgeräts ersichtlich. Die wesentlichen mechanischen Bewegungen des Coriolis-Massendurchflußmeßgeräts, wie in Fig. 1 gezeigt, sind die Schwingungen des Meßrohrs 1 und des Tragrohrs 2 in der ersten Eigenform und in der zweiten Eigenform. Sie lassen sich anhand des Schwingungsverhaltens des aus Fig. 2 ersichtlichen Modells beschreiben. Dabei beschreiben die Ersatzelemente mit Index M die effektiv wirksamen Massen, Federn und Dämpfer des Meßrohrs 1 und die Elemente mit Index $T$ entsprechend die Parameter des Tragrohrs 2. Die mit dem Index $A$ gekennzeichneten Ersatzelemente für Massen, Federn und Dämpfer beschreiben die Ersatzelemente der Aufhängungen 7. Die Indizes $A$ und $B$ stellen jeweils die linke bzw. die rechte Hälfte des Meßrohrs 1, des Tragrohrs 2 bzw. der Aufhängungen 7 dar. Die Feder und der Dämpfer mit dem Index Fm tragen der Tatsache Rechnung, daß das Meßrobr 1 in der Mitte geführt ist, nämlich durch die Mittenfeder 8. Ist keine Mittenfeder 8 vorgesehen, so entfallen natürlich die entsprechenden Terme. Die Massen mit dem Index m tragen der Tatsache Rechnung, daß an den Schwingungen in der ersten Eigenform des Meßrohrs 1 bzw. des Tragrohrs 2 eine größere Masse beteiligt ist, als an den Schwingungen in der zweiten Eigenform.

Einer Schwingung in der ersten Eigenform entspricht in diesem Modell die gleichphasige, translatorische Bewegung der Massen des Meßrohrs 1, des Tragrohrs 2 bzw. der Aufhängungen 7. Eine Rotation der äußeren Massen a und b um die Drehachsen $x_2$ bzw. $x_4$ entspricht einer. Schwingung in der zweiten Eigenform. Die mathematische Beschreibung des Schwingungsverhaltens dieses Systems kann mit Hilfe der Lagrange-Gleichung 2. Art abgeleitet werden.

Unter den Voraussetzungen, daß die Schwingungen des Meßrohrs 1 in seinen Eigenformen voneinander entkoppelt sind, die Bewegungen des Tragrohrs 2 vernachlässigt werden und die Aufhängung keine Bewegung ausführt, kann als einfachstes Modell für die Druckmessung ein Modell 2. Ordnung angesetzt werden, mit dem die Schwingung des Meßrohrs 1 nur in einer seiner Eigenformen v = 1, 2, 3, ... beschrieben wird. Die zugehörige Übertragungsfunktion lautet:

$$G_v(s) = \frac{k_v s}{s^2 + 2d_v \omega_{0v} s + \omega_{0v}^2}. \qquad (1)$$

Für die Parameter dieser Übertragungsfunktion gilt beispielsweise für die erste Eigenform:

$$k_1 = \frac{1}{m_{Ma} + m_{Mb} + m_{Mm}} = \frac{1}{m_1} \qquad (2)$$

$$\omega_{01} = \sqrt{\frac{c_{Ma} + c_{Mb} + c_{Fm}}{m_{Ma} + m_{Mb} + m_{Mm}}} = \sqrt{c_1 k_1} = \sqrt{\frac{c_1}{m_1}} \qquad (3)$$

$$d_1 = \frac{1}{2} \frac{d_{Ma} + d_{Mb} + d_{Fm}}{\sqrt{(c_{Ma} + c_{Mb} + c_{Fm})(m_{Ma} + m_{Mb} + m_{Mm})}} \qquad (4)$$

und für die zweite Eigenform:

$$G_2(s) = \frac{k_2 s}{s^2 + 2d_2 \omega_{02} s + \omega_{02}^2}. \qquad (5)$$

Für die Parameter dieser Übertragungsfunktionen gilt:

$$k_2 = \frac{1}{m_{Ma} + m_{Mb}} = \frac{1}{m_2} \qquad (6)$$

$$\omega_{02} = \sqrt{\frac{c_{Mb} + c_{Mb}}{m_{Ma} + m_{Mb}}} = \sqrt{c_2 k_2} = \sqrt{\frac{c_2}{m_2}} \qquad (7)$$

$$d_2 = \frac{1}{2} \frac{d_{Ma} + d_{Mb}}{\sqrt{(c_{Ma} + c_{Mb})(m_{Ma} + m_{Mb})}} . \qquad (8)$$

Die Federkonstante $c_v$ setzt sich aus Federkonstanten der Schwingerkomponenten, des Meßrohrs 1, des Tragrohrs 2, der Mittenfeder 8 usw. zusammen. Sie ist abhängig von dem jeweiligen Elastizitätsmodul der Komponenten, ihrer Formgebung und ihrer Anordnung und ändert sich infolge der Größen Druck und Temperatur. Hinzu kommt, daß die Schwingungsamplitude und die Schwingungsform die Nachgiebigkeit beeinflussen.

Zusammengefaßt ist die Federkonstante eine Funktion zahlreicher Prozeß- und Meßparameter:

$$c = f(T, \Delta T, \sigma, \Delta \sigma, P, \dot{m}, \hat{\dot{x}}, Formgebung, ...). \qquad (9)$$

Dieser funktionale Zusammenhang zwischen den Einflußgrößen und der Federkonstanten c ist sehr komplex und analytisch nur beschränkt beschreibbar. Er kann jedoch unter bestimmten Bedingungen zur indirekten Messung der Prozeßgröße Druck verwendet werden. Um die Federkonstanten $c_v$ zu bestimmen und daraus den Prozeßdruck zu ermitteln, wird das Coriolis-Massendurchflußmeßgerät zusätzlich bei einer oder mehreren Frequenzen angeregt und die Übertragungsfunktion gemessen. Hieraus werden dann die Steifigkeiten $c_v$ berechnet. Durch eine Kalibrierung wird der Zusammenhang zwischen den Federkonstanten und dem Betriebsdruck festgelegt Einige bevorzugte Ausführungsbeispiele der Erfindung sind nachfolgend in der ersten Eigenform und in der zweiten Eigenform beschrieben: Sie können entsprechend auch für andere Eigenformen angewandt werden.

**Bestimmung der Federsteifigkeit in der ersten Eigenform über eine einzige Zusatzanregung**

Die Bestimmungsgleichung für die Federkonstante $c_1$ lautet:

$$c_1 = \omega_{01}^2 m_1. \qquad (10)$$

Die dabei wirksame Masse ergibt sich bei einer Zusatzanregung in der Zusatzfrequenz $\omega_{Z1}$ nach einigen Umformungen zu:

$$m_1 = \frac{\omega_{Z1}}{(\omega_{01}^2 - \omega_{Z1}^2)} \cdot \frac{\mathrm{Im}\{G_1(j\omega_{Z1})\}}{\mathrm{Im}\{G_1(j\omega_{Z1})\}^2 + \mathrm{Re}\{G_1(j\omega_{Z1})\}^2} . \qquad (11)$$

Unter der Voraussetzung, daß der Absatz der Zusatzanregung zur Resonanzfrequenz groß genug ist, vereinfacht sich die Gleichung 11 zu:

$$m_1 = \frac{\omega_{Z1}}{\mathrm{Im}\{G_1(j\omega_{Z1})\}\omega_{01}^2} , \qquad (12)$$

und die Federkonstante ergibt sich aus:

$$c_1 = \frac{\omega_{Z1}}{\mathrm{Im}\{G_1(j\omega_{Z1})\}} . \qquad (13)$$

Bei der Wahl der Frequenzlage der Zusatzanregungen ist abzuwägen zwischen einer möglichst großen Amplitude der Meßsignale — der Frequenzgang der Übertragungsfunktion $G_1$ bzw. $G_2$ fällt ober- bzw, unterhalb der Eigenhequenz mit -20 [dB] pro Dekade ab - und einem ausreichenden Abstand zur Betriebsfrequenz $\omega_{01}$, um. eine gute Trennung der Signale sicherstellen zu können. Dies gilt auch für die im folgenden beschriebenen bevorzugten Ausführungsbeispiele der Erfindung.

**Bestimmung der Federkonstanten über zwei Zusatzanregungen in der ersten Eigenform**

Der Parameter $c_1$ läßt sich als Maß für den Prozeßdruck ohne Verwendung der Eigenfrequenz, entsprechend der Betriebsfrequenz, über Anregung bei wenigstens zwei zusätzlichen Frequenzen in der ersten Eigenform bestimmten.

Die Bestimmungsgleichung für die Federkonstante $c_1$ lautet:

$$c_1 = \frac{\omega_{ZA}\omega_{ZB}}{\omega_{ZB}^2 - \omega_{ZA}^2}\frac{\omega_{ZB}\,\mathrm{Im}\{G_1(j\omega_{ZA})\}}{\mathrm{Im}\{G_1(j\omega_{ZA})\}^2 + \mathrm{Re}\{G_1(j\omega_{ZA})\}^2}$$

$$-\frac{\omega_{ZA}\omega_{ZB}}{\omega_{ZB}^2 - \omega_{ZA}^2}\frac{\omega_{ZA}\,\mathrm{Im}\{G_1(j\omega_{ZB})\}}{\mathrm{Im}\{G_1(j\omega_{ZB})\}^2 + \mathrm{Re}\{G_1(j\omega_{ZB})\}^2}. \qquad (14)$$

Theoretisch beeinflußt die Lage der Zusatzfrequenzen die Druckmessung nicht, Praktisch ist jedoch eine geringfügige Abhängigkeit vorhanden, so daß die Lage der Zusatzfrequenzen an die Betriebsfrequenz gekoppelt und diesbezüglich spiegelsymmetrisch gewählt wird.

Die Federkonstanten $c_v$ können allgemein als Maß für den Prozeßdruck über Anregungen bei wenigstens zwei zusätzlichen Frequenzen in der zweiten oder einer höheren Eigenform bestimmt werden.

Die Bestimmungsgleichung für die Federkonstante $c_v$ lautet;

$$c_v = \frac{\omega_{ZA}\omega_{ZB}}{\omega_{ZB}^2 - \omega_{ZA}^2}\frac{\omega_{ZB}\,Im\{G_v(j\omega_{ZA})\}}{Im\{G_v(j\omega_{ZA})\}^2 + Re\{G_v(j\omega_{ZA})\}^2}$$

$$-\frac{\omega_{ZA}\omega_{ZB}}{\omega_{ZB}^2 - \omega_{ZA}^2}\frac{\omega_{ZA}\,Im\{G_v(j\omega_{ZB})\}}{Im\{G_v(j\omega_{ZB})\}^2 + Re\{G_v(j\omega_{ZB})\}^2}. \qquad (15)$$

Die Wahl der Lage der Zusatzfrequenzen erfolgt spiegelsymmetrisch zur Resonanzfrequenz $\omega_{01}$.

Allgemein kann der Wert der Übertragungsfunktion $G_v$ bei einer Frequenz $\omega$ z. B. aus dem Verhältnis der Schwingungsantwort $V_v$ zur Schwingungsanregung $F_v$ bestimmt werden:

$$G_v(j\omega) = \frac{V_v(j\omega)}{F_v(j\omega)}. \qquad (16)$$

Die Schwingungsanregung $F_v$ ist dabei eine Kraftanregung des Meßrohrs 1 im Eigenmode $v$ durch z. B. elektromagnetische Aktoren. Die Schwingungsantwort $V_v$ ist die Geschwindigkeit der transversalen Bewegung des Meßrohrs 1 in der Eigenform $v,$ gemessen z. B. über die geschwindigkeitsproportionalen, induzierten Spannungen über einem oder mehreren elektromagnetischen Sensor bzw. Sensoren. Andere Aktoren und Sensoren führen dabei gegebenenfalls zu einer Modifikation der Gleichung (16). So können sinusförmige Signale $A_v$ von Beschleunigungssensoren über

$$V_v(j\omega) = \frac{1}{j\omega} A_v(j\omega) \qquad (17)$$

in Geschwindigkeiten umgerechnet werden. Entsprechend gilt für sinusförmige auslenkungsproportionale Signale $S_v$ von z. B. optischen Sensoren

$$V_v(j\omega) = j\omega \cdot S_v(j\omega). \qquad (18)$$

**Zusammenhang zwischen dem Prozeßdruck $P$ und der Federkonstanten $c_v$**

Zwischen der Federkonstanten $c_v$ und dem Prozeßdruck $P$ besteht der Zusammenhang:

$$P = f(c_v, T, ...). \qquad (19)$$

Im speziellen Fall gilt:

$$P = k_v \cdot c_v + k_{0v} \cdot c_{0v}(T). \qquad (20)$$

Der Proportionalitätsfaktoren $k_v$ und $k_{0v}$ ist ein Designparameter und kann für eine Eigenform über einen bestimmten Druckmeßbereich als konstant angesehenen werden und gegebenenfalls durch Kalibrierung bestimmt werden. Die Federkonstante $c_{0v}$ ist temperaturabhängig und beschreibt den Nullpunkt der Kennlinie für die jeweilige Eigenform. Sie kann mit Hilfe der gemessenen Temperatur korrigiert werden.

Die Federkonstanten hängen bei typischen Coriolis-Massendurchflußmeßgeräten nur geringfügig von der Schwingungsamplitude ab, so daß der Einfluß der Schwingungsamplitude auf die Druckmessung vernachlässigt werden kann. Bei Geräten mit größerer Dynamik in der Amplitude, bei denen die Amplitudenabhängigkeit größer ausfällt, kann eine Online-Korrektur der Schwingungsamplitude durchgeführt werden.

**Berücksichtigung von Querempfindlichkeiten**

Der Zusammenhang zwischen der Federsteifigkeit und dem Druck im Meßrohr 1 wird von weiteren Prozeßgrößen beeinflußt. Einflüsse der Temperatur auf die Federsteifigkeit können über die Messung der Temperatur des Meßrohrs 1 korrigiert werden. Einflüsse von Verspannungen können bei Bedarf über die unterschiedlichen Empfindlichkeiten der Federsteifigkeiten für die verschiedenen Eigenformen oder über im Coriolis-Masseudurclifußmeßgerät eingebaute Spannungsmesser, wie Dehnungsmeßstreifen, berücksichtigt werden.

**Experimentelle Ergebnisse**

Zu Versuchszwecken wurde ein Coriolis-Massendurchflußmeßgerät in vertikaler Einbaulage an eine Manometerprüfpumpe angeschlossen, mit der es möglich ist, einen statischen Druck bis maximal 60 bar zu erzeugen. Während des Versuches wurde der Druck etwa alle zehn Minuten auf einen neuen Wert eingestellt, der dann für jeweils eine Zeitspanne von zehn Minuten im wesentlichen konstant gewesen ist (Druckabfall maximal 2 bar bei einem Anfangsdruck von 50 bar).

Aus den Fig. 3 und 4 sind nun die Meßergebnisse ersichtlich, die sich für destilliertes Wasser als durch das Meßrohr 1 fließendes Medium ergeben haben. Man erkennt gut, daß die druckbedingte Änderung der Federsteifigkeit durch die modellbasiertc Bestimmung der Federsteifigkeit $c_v$ sehr gut erfaßt wird.

**Patentansprüche**

1.  Verfahren zum Betreiben eines Massendurchflußmeßgeräts, das nach dem Coriolis-Prinzip arbeitet, wobei das Massendurchflußmeßgerät ein von einem Medium durchströmtes Meßrohr (1) aufweist, eine Schwingungsanregung des Meßrohrs (1) vorgesehen ist und die resultierende Schwingungsantwort des Meßrohrs (1) erfaßt wird und der Druck des durch das Meßrohr (1) strömenden Mediums bestimmt wird, indem die erfaßte Schwingungsantwort auf der Grundlage eines physikalisch-mathematischen Modells für die Dynamik des Massendurchflußmeßgeräts ausgewertet wird,
    **dadurch gekennzeichnet,**
    **daß** über das physikalisch-mathematische Modell die effektiv wirksamen Federsteifigkeiten der durch das Modell beschriebenen Eigenformen der Schwingungen des Meßrohrs (1) berücksichtigt werden, wobei eine Betriebsanregung in der ersten Eigenform des Meßrohrs in Resonanzfrequenz und eine Zusatzanregung in der ersten Eigenform des Meßrohrs in einer davon verschiedenen Zusatzfrequenz vorgesehen sind und die effektiv wirksame Federsteifigkeit des Meßrohrs (1) bei einer Schwingung in dieser Eigenform mittels der über die Betriebsanregung ermittelten Resonanzfrequenz des vom Medium durchflossenen Meßrohrs (1) in dieser Eigenform und der Schwingungsantwort auf die Zusatzanregung erfaßt wird, wobei bei der Wahl der Frequenzlage der Zusatzanregung abzuwägen ist zwischen einer möglichst großen Amplitude der Meßsignale und einem ausreichenden Abstand zur Resonanzfrequenz, um eine gute Trennung der Signale sicherstellen zu können.

2.  Verfahren zum Betreiben eines Massendurchflußmeßgeräts, das nach dem Coriolis-Prinzip arbeitet, wobei das Massendurchflußmeßgerät ein von einem Medium durchströmtes Meßrohr (1) aufweist, eine Schwingungsanregung des Meßrohrs (1) vorgesehen ist und die resultierende Schwingungsantwort des Meßrohrs (1) erfaßt wird und der Druck des durch das Meßrohr (1) strömenden Mediums bestimmt wird, indem die erfaßte Schwingungsantwort auf der Grundlage eines physikalisch-mathematischen Modells für die Dynamik des Massendurchflußmeßgeräts ausgewertet wird,
    **dadurch gekennzeichnet,**
    **daß** über das physikalisch-mathematische Modell die effektiv wirksamen Federsteifigkeiten der durch das Modell beschriebenen Eigenformen der Schwingungen des Meßrohrs (1) berücksichtigt werden, wobei zwei Zusatzanregungen in der ersten Eigenform des Meßrohrs (1) vorgesehen sind und die effektiv wirksame Federsteifigkeit des Meßrohrs (1) bei einer Schwingung in dieser Eigenform mittels der Schwingungsantworten auf die beiden Zusatzanregungen erfaßt wird, wobei die Lage der Zusatzfrequenzen an die Betriebsfrequenz in der Eigenfrequenz der ersten Eigenform gekoppelt und diesbezüglich spiegelsymmetrisch gewählt ist.

3.  Verfahren nach Anspruch 1 oder 2, **dadurch gekennzeichnet, daß** ein physikalisch-mathematisches Modell wenigstens zweiter Ordnung für die Dynamik des Massendurchflußmeßgeräts verwendet wird.

4.  Verfahren nach einem der Ansprüche 1 bis 3, **dadurch gekennzeichnet, daß** das physikalisch-mathematische Modell zur Beschreibung der Schwingungen des Massendurchflußmeßgeräts bei Anregung des Meßrohrs (1) in wenigstens einer Eigenform geeignet ist.

5.  Verfahren nach einem der Ansprüche 1 bis 4, **dadurch gekennzeichnet, daß** bei der Bestimmung des Drucks zusätzliche Einflüsse auf die Dynamik des Meßrohrs (1), wie die Bewegung des Tragrohrs (2) oder/und die Einflüsse durch auf eine Aufhängung (7) des Meßrohrs (1) berücksichtigt werden.

6.  Verfahren nach einem der Ansprüche 1 bis 5, **dadurch gekennzeichnet, daß** die Temperatur im Massendurchflußmeßgerät erfaßt wird, um die Temperaturabhängigkeit der Funktion von Einrichtungen des Massendurchflußmeßgeräts, wie einem Schwingungserzeuger (4) für das Meßrohr (1) oder/und einem Schwingungssensor (5) für das Meßrohr (1), zu berücksichtigen.

7.  Verfahren nach einem der Ansprüche 1 bis 6, **dadurch gekennzeichnet, daß** die Temperatur des Meßrohrs (1) erfaßt wird, um eine temperaturabhängige Änderung der Federsteifigkeit des Meßrohrs (1) bei der Bestimmung des Drucks zu berücksichtigen.

**Claims**

1.  Method for operating a mass flowmeter that operates using the Coriolis principle, wherein the mass flowmeter has a measuring tube (1) with medium flowing through it, oscillation excitation of the measuring tube (1) is provided and the resulting oscillatory response of the measuring tube (1) is recorded and the pressure of the medium flowing through the measuring tube (1) is determined in that the recorded oscillatory response is evaluated for the dynamics of the mass flowmeter on the basis of a physical-mathematical model
**characterized in**
**that** the physical-mathematical model takes into consideration the actual effective rigidity values of the natural modes of the oscillations, described by the physical-mathematical model, of the measuring tube (1), wherein an operation excitation in the first natural mode of the measuring tube in resonant frequency and an additional excitation in the first natural mode of the measuring tube in an additional, different frequency are provided and the actual effective rigidity value of the measuring tube (1) at oscillation in this natural mode is recorded by means of the resonant frequency of the measuring tube (1) with medium flowing through it determined via the operation excitation and the oscillatory response to the additional excitation, wherein, when choosing the frequency of the additional excitation, a balance is to be found between a large as possible amplitude of the measuring signal and a sufficient distance to the resonant frequency in order to be able to ensure a good separation of the signals.

2. Method for operating a mass flowmeter that operates using the Coriolis principle, wherein the mass flowmeter has a measuring tube (1) with medium flowing through it, oscillation excitation of the measuring tube (1) is provided and the resulting oscillatory response of the measuring tube (1) is recorded and the pressure of the medium flowing through the measuring tube (1) is determined in that the recorded oscillatory response is evaluated for the dynamics of the mass flowmeter on the basis of a physical-mathematical model
**characterized in**
**that** the physical-mathematical model takes into consideration the actual effective rigidity values of the natural modes of the oscillations, described by the physical-mathematical model, of the measuring tube (1), wherein two additional excitations in the first natural mode of the measuring tube (1) are provided and the actual effective rigidity value of the measuring tube (1) at an oscillation in this natural mode is recorded by means of the oscillatory response to the two additional excitations, wherein the additional frequency is coupled to the operation frequency in the eigenfrequency of the first natural mode and, to this effect, is chosen to be mirror symmetrical.

3. Method according to claim 1 or 2, **characterized in that** a physical-mathematical model of at least the second order is used for the dynamics of the mass flowmeter.

4. Method according to any one of claims 1 to 3, **characterized in that** the physical-mathematical model is suitable for describing the oscillations of the mass flowmeter when the measuring tube (1) is excited in at least one natural mode.

5. Method according to any one of claims 1 to 4, **characterized in that** additional influences on the dynamics of the measuring tube (1) while determining the pressure, such as the movement of the supporting tube (2) and/or the influences caused by mounting the measuring tube (1), are taken into consideration.

6. Method according to any one of claims 1 to 5, **characterized in that** the temperature in the mass flowmeter is recorded in order to take into consideration the temperature dependency of the function of devices of the mass flowmeter, such as an oscillation generator (4) for the measuring tube (1) and/or an oscillation sensor (5) for the measuring tube (1).

7. Method according to any one of claims 1 to 6, **characterized in that** the temperature of the measuring tube (1) is recorded in order to take into consideration a temperature-dependent change of the rigidity value of the measuring tube (1) when determining the pressure.

**Revendications**

1. Procédé d'utilisation d'un appareil de mesure de débit massique qui travaille selon le principe de Coriolis,
l'appareil de mesure de débit massique présentant un tube de mesure (1) traversé par un fluide,
une excitation en oscillation du tube de mesure (1) étant prévue et la réponse oscillante résultante du tube de mesure (1) étant saisie,
la pression du fluide traversant le tube de mesure (1) étant déterminée en évaluant la réponse oscillante saisie sur la base d'un modèle physico-mathématique de la dynamique de l'appareil de mesure de débit massique, **caractérisé en ce que**
les rigidités élastiques effectivement actives des formes propres, décrites par le modèle, des oscillations du tube de mesure (1) sont prises en compte par l'intermédiaire du modèle physico-mathématique, une excitation en fonctionnement dans la première forme propre du tube de mesure à la fréquence de résonance et une excitation supplémentaire dans la première forme propre du tube de mesure à une fréquence supplémentaire différente de la première étant prévues, et la rigidité élastique effectivement active du tube de mesure (1) lors d'une vibration dans cette forme propre étant saisie au moyen de la fréquence de résonance, déterminée par l'intermédiaire de l'excitation de fonctionnement, du tube de mesure (1) traversé par le fluide dans cette forme propre et de la réponse oscillante à l'excitation supplémentaire lors de la sélection de la position en fréquence de l'excitation supplémentaire, un compromis étant effectué entre une amplitude aussi grande que possible des signaux de mesure et une distance par rapport à la fréquence de résonance suffisante pour pouvoir garantir une bonne séparation des signaux.

2. Procédé d'utilisation d'un appareil de mesure de débit massique qui travaille selon le principe de Coriolis, l'appareil de mesure de débit massique présentant un tube de mesure (1) traversé par un fluide, une excitation en oscillation du tube de mesure (1) étant prévue et la réponse oscillante résultante du tube de mesure (1) étant saisie, la pression du fluide traversant le tube de mesure (1) étant déterminée en évaluant la réponse oscillante saisie sur la base d'un modèle physico-mathématique de la dynamique de l'appareil de mesure de débit massique, **caractérisé en ce que** les rigidités élastiques effectivement actives des formes propres, décrites par le modèle, des oscillations du tube de mesure (1) sont prises en compte par l'intermédiaire du modèle physico-mathématique, deux excitations supplémentaires étant prévues dans la première forme propre du tube de mesure (1) et la rigidité élastique effectivement active du tube de mesure (1) lors d'une oscillation dans cette forme propre étant saisie au moyen des réponses oscillantes aux deux excitations supplémentaires et la position des fréquences supplémentaires étant couplée à la fréquence de service dans la fréquence propre de la première forme propre et étant sélectionnée à symétrie spéculaire par rapport à cette dernière.

3. Procédé selon les revendications 1 ou 2, **caractérisé en ce qu'**il utilise un modèle physico-mathématique d'au moins le deuxième ordre pour la dynamique de l'appareil de mesure de débit massique.

4. Procédé selon l'une des revendications 1 à 3, **caractérisé en ce que** le modèle physico-mathématique convient pour décrire les oscillations de l'appareil de mesure de débit massique lorsque le tube de mesure (1) est excité dans au moins une forme propre.

5. Procédé selon l'une des revendications 1 à 4, **caractérisé en ce que** dans la détermination de la pression, on tient compte d'influences supplémentaires sur la dynamique du tube de mesure (1), par exemple le déplacement du tube porteur (2) et/ou les influences exercées par une suspension (7) du tube de mesure (1).

6. Procédé selon l'une des revendications 1 à 5, **caractérisé en ce que** la température qui règne dans l'appareil de mesure de débit massique est saisie pour tenir compte de la dépendance vis-à-vis de la température du fonctionnement de dispositifs de l'appareil de mesure de débit massique, par exemple un générateur d'oscillation (4) pour le tube de mesure (1) et/ou un capteur d'oscillations (5) pour le tube de mesure (1).

7. Procédé selon l'une des revendications 1 à 6, **caractérisé en ce que** la température du tube de mesure (1) est saisie pour tenir compte d'une modification en fonction de la température de la rigidité élastique du tube de mesure (1) lors de la détermination de la pression.

Fig. 1

11

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10002635 A1
- DE 4200060 A1